Europäisches Patentamt

European Patent Office

Office européen des brevets

(11) Veröffentlichungsnummer: **0 152 938**
A2

# EUROPÄISCHE PATENTANMELDUNG

(21) Anmeldenummer: 85101765.7

(22) Anmeldetag: 18.02.85

(51) Int. Cl.⁴: **F 16 J 15/32**

(30) Priorität: 21.02.84 DE 8405275 U

(43) Veröffentlichungstag der Anmeldung: 28.08.85
Patentblatt 85/35

(84) Benannte Vertragsstaaten: DE FR GB IT SE

(71) Anmelder: Martin Merkel GmbH & Co. KG,
Sanitasstrasse 17-21, D-2102 Hamburg 93 (DE)

(72) Erfinder: Grins, Dieter, Ing. grad., Cusanushof 27,
D-5140 Erkelenz (DE)

(74) Vertreter: Glawe, Delfs, Moll & Partner Patentanwälte,
Postfach 162 Liebherrstrasse 20,
D-8000 München 26 (DE)

(54) Kolben- oder Stangendichtring.

(57) Kolben- oder Stangendichtring aus elastischem Material, der in einer Haltenut zu montieren ist und sich im Querschnitt zusammensetzt aus einem am Nutgrund anzuliegen bestimmten Fussteil, einem an seiner Umfangsfläche eine Dichtfläche bildenden Kopfteil und einer sich von dem Fussteil zum Kopfteil erstreckenden, in radialer Richtung leicht verformbaren Verbindungsmembran. Der Kopfteil weist zwei Stirnflächen auf, von denen wenigstens eine mit einer Nutflanke in Berührung kommen kann und die an ihrer der Dichtäche abgewandten Seite von gegensinnig axial sich öffnenden Zwischenräumen begrenzt sind. Damit der Dichtring auch im Falle von ungewöhnlichen Änderungen der Druckverhältnisse seine Dichtwirkung beibehält, ist vorgesehen, dass bei derjenigen Stirnfläche, die mit der Nutflanke in Berührung kommen kann, eine die Umfangsfläche mit dem der Stirnfläche benachbarten Zwischenraum verbindende Ausnehmung vorgesehen ist. Diese Ausnehmung kann als Nut in der Stirnfläche ausgebildet sein. Zweckmässigerweise sind beide Stirnseiten des Kopfteils mit derartigen Ausnehmungen versehen.

GLAWE, DELFS, MOLL & PARTNER

PATENTANWÄLTE
ZUGELASSENE VERTRETER BEIM EUROPÄISCHEN PATENTAMT

RICHARD GLAWE
DR.-ING.

WALTER MOLL
DIPL.-PHYS. DR. RER. NAT.
ÖFF. BEST. DOLMETSCHER

KLAUS DELFS
DIPL.-ING.

ULRICH MENGDEHL
DIPL.-CHEM. DR. RER. NAT.

HEINRICH NIEBUHR
DIPL.-PHYS. DR. PHIL. HABIL.

8000 MÜNCHEN 26
POSTFACH 162
LIEBHERRSTR. 20
TEL. (0 89) 22 65 48
TELEX 5 22 505 SPEZ
TELECOPIER (0 89) 22 39 38

2000 HAMBURG 13
POSTFACH 25 70
ROTHENBAUMCHAUSSEE 58
TEL. (0 40) 4 10 20 08
TELEX 21 29 21 SPEZ
TELECOPIER (0 40) 45 89 84

Martin Merkel
GmbH & Co KG,

Hamburg

Kolben- oder
Stangendichtring

IHR ZEICHEN     IHRE NACHRICHT VOM     UNSER ZEICHEN /84 EU     HAMBURG
                                       P 11384/84 EU

Beschreibung

Die Erfindung bezieht sich auf einen Kolben- oder Stangendichtring gemäß Gattungsbegriff des Anspruchs 1.

Bei bekannten Dichtringen der genannten Art (DE-OS 21 33 476)
erstrecken sich der Fußteil und der Kopfteil im wesentlichen
über dieselbe Axiallänge, wobei die Verbindungsmembran vom
einen axialen Ende des Fußteils zum anderen axialen Ende des
Kopfteils Z-förmig führt. Der Ring ist einstückig aus gummielastischem Werkstoff hergestellt. Er ist überwiegend für
Anwendungen in der Pneumatik vorgesehen, in denen es auf
geringe Leerlaufreibung dank geringer axialer Vorspannung
ankommt. Die Dichtpressung bei höheren Drücken wird dadurch
erreicht, daß der abzudichtende Druck von dem zwischen dem
Kopfteil und der Verbindungsmembran befindlichen Zwischenraum her den Kopfteil gegen die Gegendichtfläche preßt.

... 2

Dabei wird der Kopfteil mit seiner niederdruckseitigen Stirnfläche gegen die niederdruckseitige Flanke der den Dichtring aufnehmenden Nut gepreßt und durch Reibung daran festgehalten. Ändern sich nun die Druckverhältnisse, indem von der Niederdruckseite her ein Gegendruck aufgebaut wird, so kann es aufgrund dieser Reibung geschehen, daß der Dichtring sich den veränderten Druckverhältnissen nicht anpassen kann und seine Dichtwirkung verliert.

Der Erfindung liegt die Aufgabe zugrunde, einen Dichtring der eingangs genannten Art zu schaffen, der auch im Falle derartiger Veränderungen der am Dichtring herrschenden Druckverhältnisse seine Dichtwirkung beibehält.

Die Lösung wurde in den kennzeichnenden Merkmalen des Anspruchs 1 gefunden.

Die Erfindung beruht auf folgender Erkenntnis. Wenn der Dichtring zunächst durch den von der einen Seite her wirkenden Druck gegen die niederdruckseitige Nutflanke gepreßt wird, ist der dorthin offene Zwischenraum zwischen der Verbindungsmembran und dem Fußteil des Dichtrings von dem niedrigen Druck beaufschlagt. Außerdem kann dieser Zwischenraum durch elastische Verformung des Dichtrings unter der Wirkung des von der anderen Seite her wirkenden höheren Drucks verkleinert sein. Wenn sich nun ein Gegendruck von der Niederdruckseite her aufbaut, erreicht dieser den Zwischenraum nicht, weil die zugehörige Stirnfläche des Kopfteils dicht an der Nutflanke anliegt und sich infolge des in dem Zwischenraum befindlichen niedrigeren Drucks und des Rückverformungsstrebens des elastisch verkleinerten Zwischenraums daran festsaugt. Dabei wird der Reibschluß zwischen dem Kopfteil und der

0152938

Nutflanke aufrecht erhalten, und der Dichtring kann sich
den geänderten Druckverhältnissen nicht durch Änderung
seiner Lage anpassen. Er kann den Kontakt mit der Gegendichtfläche verlieren, so daß das Medium den Dichtspalt
in der einen oder anderen Richtung passieren kann.

Dank der erfindungsgemäßen Ausnehmung, die die Umfangsfläche
des Kopfteils mit dem nieder- bzw. gegendruckseitigen Zwischenraum verbindet, wird der Druckausgleich des Rings an der
nieder- bzw. gegendruckseitigen Nutflanke ermöglicht. Der
sich aufbauende Gegendruck kann den Zwischenraum durch die
Ausnehmung hindurch erreichen, so daß der Dichtungsring sich
anschließend frei in der Nut bewegen und die dem überwiegenden Gegendruck entsprechende Dichtstellung einnehmen kann.

Zweckmäßigerweise ist die Ausnehmung als Nut bzw. als eine
Vielzahl von Nuten, die durch entsprechende Vorsprünge voneinander getrennt sind, ausgebildet. Die Vorsprünge sollen
sich nach einem weiteren Merkmal im wesentlichen bis zur Umfangsfläche einerseits und zum Zwischenraum andererseits
erstrecken, weil sonst die Gefahr besteht, daß durch Kippen
des Kopfteils dessen mit Vorsprüngen nicht besetzter Ringabschnitt, der an sich im entspannten Zustand axial hinter
den Vorsprüngen zurückliegt, dennoch an die Nutflanke herankommt und sich abdichtend daran anschließt. Die Vorsprünge
brauchen sich der Umfangskante bzw. der Zwischenraumkante der
Stirnfläche lediglich so weit zu nähern, daß selbst bei dem
in der Praxis auftretenden Kippen des Kopfteils eine zwischenraumfreie Anlage desselben an der Nutstirnfläche nicht mehr
möglich ist.

Zweckmäßigerweise werden die erfindungsgemäßen Ausnehmungen bzw. Vorsprünge auf beiden Stirnseiten des Kopfteils vorgesehen.

Die Erfindung wird im folgenden näher unter Bezugnahme auf das in der Zeichnung erläuterte Ausführungsbeispiel beschrieben. Darin zeigen:

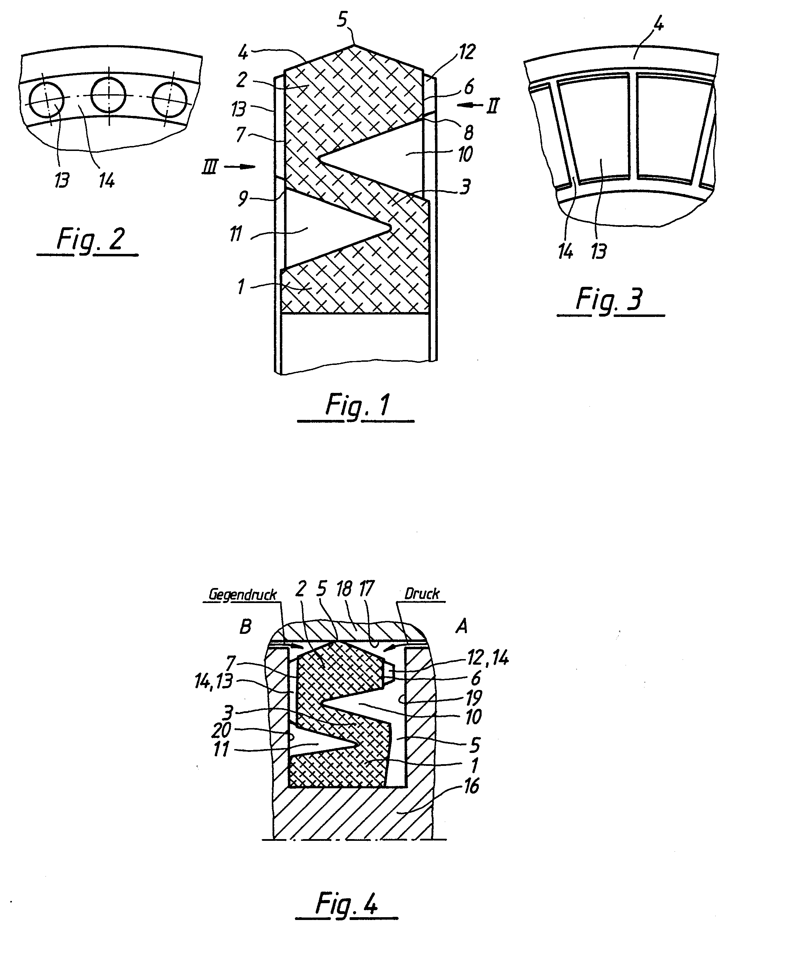

Fig. 1        einen Schnitt durch eine Ausführung des Rings in einer die Ringachse enthaltenden Radialebene,

Fig. 2        eine Axialansicht des Rings gemäß Fig. 1 in Pfeilrichtung V,

Fig. 3        eine Axialansicht des Rings in Pfeilrichtung VI und

Fig. 4        den Ring gemäß Fig. 1 in Einbaustellung.

Der Dichtring besteht aus einem Fußteil 1, der zur Abstützung auf dem Nutgrund einer Einbaunut, beispielsweise eines Kolbens oder Zylinders, vorgesehen ist und daran im allgemeinen mit Vorspannung anliegt, einem Kopfteil 2, der zur Anlage an der Gegendichtfläche bestimmt ist und sich radial außerhalb des Fußteils etwa in derselben Ebene befindet, und einer Verbindungsmembran 3, die sich mit einer im wesentlichen axialer Richtung von der einen axialen Seite des Fußteils 1 zur anderen axialen Seite des Kopfteils 2 erstreckt. Aufgrund dieser Formgebung und geringer Dicke der Verbindungsmembran 3 kann der Dichtungsring radialen Formänderungen des Kopf-

0152938

teils 2  gegenüber dem Fußteil 1  ohne wesentliche Kraftentwicklung nachgeben. Im drucklosen Zustand liegt er nur
mit geringer Vorspannung an der Gegendichtfläche an und
verursacht daher nur geringe Reibungskräfte.

Der Kopfteil 2  bildet eine Umfangsfläche 4,  die entweder
unmittelbar als Dichtfläche mit der Gegendichtfläche zusammenwirkt und dann mit einer Dichtkante 5  versehen sein kann,
oder einen weiteren, nicht gezeigten Dichtteil trägt, der
als Ring mit einem beispielsweise kappenförmigen Querschnitt
dem Kopfteil 2  aufgesetzt ist und seinerseits die mit der
Gegendichtfläche zusammenwirkende Dichtfläche bildet.

Der Kopfteil 2  wird axial durch Stirnflächen 6, 7  begrenzt,
die an die Zwischenräume 10 bzw. 11 angrenzen, die zwischen
der Verbindungsmembrane 3  bzw. dem Kopfteil 2  einerseits
und dem Fußteil 1  andererseits gebildet sind und sich zu
entgegengesetzten Seiten des Dichtrings hin axial öffnen.

Die den Dichtring aufnehmende Nut 15,  die in einen Kolben
oder Zylinder 16  eingeschnitten ist und der die Gegendichtfläche 17  des Teils 18  gegenübersteht, wird durch Flanken
19, 20  begrenzt, deren lichter Abstand etwas größer ist
als die  axiale Abmessung des Dichtrings, so daß sich die
Stirnflächen 6, 7  je nach Einbaulage und Druckverhältnissen
an den zugehörigen Nutflanken 19, 20  abstützen können.

Der Dichtungsring ist zweckmäßigerweise einstückig aus gummielastischem Material hergestellt. Er kann gewünschtenfalls
mehrteilig hergestellt sein und oder aussteifende Einlagen
enthalten.

Der insoweit bekannte Dichtungsring liegt in drucklosem
Zustand unter Vorspannung an der Gegendichtfläche 17 an.
Wenn von der Seite A her ein Überdruck gegenüber der
Seite B auf den Dichtring einwirkt, so kann es geschehen,
daß dieser sich mit der Stirnfläche 7 fest und auch im
wesentlichen dicht an die Flanke 20 der Nut anlegt. Die
Betriebstüchtigkeit des Dichtrings wird dabei gegenüber
dem von der Seite A her wirkenden Druck noch nicht eingeschränkt. Wenn nun aber von der Niederdruckseite B her
ein Gegendruck aufgebaut wird, so kann dieser infolge der
dichten Anlage des Rings an der Flanke 20 der Nut nicht
in den Zwischenraum 11 eindringen. Der Ring bleibt an der
Flanke 20 sozusagen festgesaugt. Da gleichzeitig die Krafteinwirkung durch den von der Seite A her wirkenden Druck
infolge des von B her wirkenden Gegendrucks auf den Kopfteil 2 des Dichtrings herabgesetzt wird, kann dieser sich
so verformen, daß die Dichtfläche 4 sich von der Gegendichtfläche 17 abhebt und die Dichtwirkung somit verloren
geht.

Obgleich die bekannte Dichtung für viele Anwendungsfälle
geeignet ist, kann sie daher unter ganz bestimmten Umständen
des Druckverlaufs versagen.

Die erfindungsgemäße Dichtung, die im Grundsatz denselben
Aufbau hat wie die bekannte, vermeidet diesen Nachteil
dadurch, daß die Stirnseiten 6 und/oder 7 des Kopfteils 2
mit vorspringenden Flächenanteilen 12, 13 versehen sind,
die zweckmäßigerweise gleichmäßig mit Abstand über den
Umfang verteilt sind und zwischen sich Nuten oder Ausnehmungen oder rückspringende Flächenanteile 14 bilden. Zweckmäßigerweise erstrecken sich die vorspringenden Flächen 12,13
im wesentlichen über die gesamte radiale Breite der Stirnflächen 6, 7. Meist können sie radial etwas kürzer ausgeführt werden, solange der vorsprungsfreie Breitenbereich
der Stirnflächen so gering ist, daß keine Gefahr besteht,
daß er sich unter einseitiger Druckeinwirkung noch abdichtend
an der zugehörigen Flanke der Nut anlegt.

Die vorspringenden Flächen bzw. die zwischen ihnen befindlichen Nuten 14 bewirken, daß von der Dichtfläche 4 her
eine Verbindung zu mindestens einem der Zwischenräume 10,11
vorhanden ist, zweckmäßigerweise zu beiden Zwischenräumen,
damit der Dichtungsring ohne Berücksichtigung seiner Geometrie
im Hinblick auf die im Betrieb auftretenden Druckrichtungen
eingebaut werden kann.

Dank der erfindungsgemäßen Strömungsverbindungen zwischen
der Dichtfläche und den Dichtringzwischenräumen kann es bei
den oben geschilderten Betriebsverhältnissen nicht geschehen,
daß der Dichtring sich an der zunächst niederdruckseitig

0152938

Patentansprüche

1. Kolben- oder Stangendichtring aus elastischem Material,
   der in einer Haltenut zu montieren ist und sich im
   Querschnitt zusammensetzt aus einem am Nutgrund anzuliegen bestimmten Fußteil, einem an seiner Umfangsfläche
   eine Dichtfläche bildenden Kopfteil, der zwei Stirnflächen aufweist, von denen wenigstens eine mit einer Nutflanke in Berührung kommen kann und die an ihrer der
   Dichtfläche abgewandten Seite von gegensinnig axial sich
   öffnenden Zwischenräumen begrenzt sind, und einer sich
   von dem Fußteil zum Kopfteil erstreckenden, in radialer
   Richtung leicht verformbaren Verbindungsmembran,
   dadurch gekennzeichnet, daß bei derjenigen Stirnfläche (7,6)
   die mit der Nutflanke (19,20)  in Berührung kommen kann,
   eine die Umfangsfläche (4)  mit dem der Stirnfläche (6,7)
   benachbarten Zwischenraum (10,11)  verbindende Ausnehmung (14)  vorgesehen ist.

2. Dichtring nach Anspruch 1, dadurch gekennzeichnet,
   daß die Verbindungsmembran sich von einer axialen Seite
   des Fußteils in im wesentlichen axialer Richtung sich
   zu der axial anderen Seite des Kopfteils erstreckt.

3. Dichtring nach Anspruch 1 oder 2, dadurch gekennzeichnet, daß die Ausnehmung (14) als Nut in der Stirnfläche ausgebildet ist.

4. Dichtring nach einem der Ansprüche 1 bis 3, dadurch
   gekennzeichnet, daß mehrere von Vorsprüngen (13) getrennte Nuten (14) vorgesehen sind.

5. Dichtring nach einem der Ansprüche 1 bis 4, dadurch
   gekennzeichnet, daß die Vorsprünge (13) sich im wesentlichen bis zur Umfangsfläche (4) einerseits und zum
   Zwischenraum (10,11) andererseits erstrecken.

6. Dichtring nach einem der Ansprüche 1 bis 5, dadurch
   gekennzeichnet, daß die Ausnehmungen (14) an beiden
   Stirnseiten (6,7) des Kopfteils (2) vorgesehen sind.

0152938

Fig. 2

Fig. 1

Fig. 3

Fig. 4